# EUROPEAN PATENT APPLICATION

(11) **EP 2 497 970 A1**
(43) Date of publication of application: **12.09.2012**
(21) Application number: 10828273.2
(22) Date of filing: 01.11.2010
(51) Int. Cl.: F16F 1/38

(54) **BUSH**

(30) Priority: 05.11.2009 JP 2009254378
(71) Applicant: FUKOKU Co., Ltd., Ageo-shi, Saitama 362-8561 (JP)
(72) Inventor: ARAI, Kazuo, Ageo-shi, Saitama 362-8561 (JP); IIDA, Masakazu, Ageo-shi, Saitama 362-8561 (JP); KOIKE, Kiyotaka, Ageo-shi, Saitama 362-8561 (JP)
(74) Representative: Bezault, Jean
(86) International application number: PCT/JP2010/069450
(87) International publication number: WO 2011/055713

(57) **Abstract**

A joint pin 40 extending in an axial direction of an inner cylinder 32 is provided on the inside in a radial direction of the inner cylinder 32, a projecting portion 42 projecting outward in a radial direction of the joint pin 40 is provided to the joint pin 40, shoulder portions 42a are provided on both sides in an axial direction, a bearing 50 guiding a relative rotation of the joint pin 40 with respect to the inner cylinder 32 is provided between the inner cylinder 32 and the projecting portion 42, bent portions 33 bent inward in the radial direction of the inner cylinder 32 are provided on both sides of the inner cylinder 32 in the axial direction, and elastic members 60 are incorporated between the bent portions 33 and the shoulder portions 42a.

## Description

### TECHNICAL FIELD

The present invention relates to a bush provided between one member and the other member to absorb impact and vibrations transmitted between the members.

### BACKGROUND ART

Conventionally, a vehicle such as automobile, truck, and bus is provided with a suspension device between a vehicle body (one member) and an axle (the other member). The suspension device has a spring member absorbing impact and vibrations, and a damping member (absorbing member) damping vibrations of the spring member. As the spring member, a coil spring, an air spring, or the like is used. As the damping member, a hydraulic damper or the like is used. Among these, a suspension device of a truck or the like may include a torque rod in addition to the spring member and the damping member. On both end sides of the torque rod, torque rod bushes (bushes) are mounted. Each torque rod bush allows the axle to be relatively moved with respect to the bodywork within a predetermined range, absorbs propagation of impact vibrations inputted from a road surface to the bodywork and, in turn, improves the riding comfort and stability in handling, for example. As the torque rod bush for use in the torque rod described above, for example, technologies described in Patent Documents 1 and 2 have been known.

An impact-absorbing joint (bush) described in Patent Document 1 includes an outer cylinder and an inner cylinder that are made of a steel material, and a cushion material (rubber) is provided between the outer cylinder and the inner cylinder by vulcanization bonding or the like. In a center portion in an axial direction of the inner cylinder, a narrow-diameter portion projecting inward in a radial direction is provided. On the inside in the radial direction of the narrow-diameter portion, paired bearing members are provided. The bearing members are mounted from both sides in the axial direction of the inner cylinder and each supported by a step portion of the narrow-diameter portion. On the inside in a radial direction of each bearing member, a joint pin made of a steel material is provided. The joint pin is rotatably supported by each bearing member. As such, the bush described in Patent Document 1 is a so-called rotation-type bush. In each bearing member, paired packing seals are mounted from one side and the other side in an axial direction of the joint pin, furthermore, with paired fixing rings being mounted from the one side and the other side in the axial direction of the joint pin, falling can be prevented. Each fixing ring is prevented from falling by press fitting the joint pin. Then, paired dust covers are mounted from the one side and the other side in an axial direction of the joint pin, thereby preventing entrance of dusts and others from entering a sliding portion between each bearing member and the joint pin. Herein, for example, the joint pin is fixed to the vehicle body side, and the outer cylinder is fixed to the axle side via a torque rod.

The torque rod bush (bush) described in Patent Document 2 is a rotation-type bush similarly to that of Patent Document 1. The torque rod bush of Patent Document 2 includes an outer cylinder and a sleeve, each of which are made of steel material, and a cushion cylinder (rubber) is bonded between the outer cylinder and the sleeve. On the inside in a radial direction of the sleeve, an inner cylinder made of polymer material (such as polyamide) is provided. On the inside in a radial direction of the inner cylinder, a spherical surface portion of a mount shaft is rotatably mounted. The inner cylinder between the sleeve and the spherical surface portion is formed by pouring molten polymer material between the sleeve and the spherical surface portion to solidify the poured polymer material (Assembling Pattern A). Also, the inner cylinder is formed in advance, and after the inner cylinder is inserted into the sleeve, inner flanges are formed on both end sides of the sleeve, thereby providing the inner cylinder between the sleeve and the spherical surface portion (Assembling Pattern B). Herein, for example, the mount shaft is fixed to a vehicle body side, and the outer cylinder is fixed to an axle side via a torque rod.

### PRIOR ART DOCUMENTS

### PATENT DOCUMENTS

Patent Document 1: Japanese Utility Model Application Laid-Open Publication No. S59-090639 (FIG. 1)
Patent Document 2: Japanese Patent Application Laid-Open Publication No. H10-153237 (FIGS. 1 and 4)

### DISCLOSURE OF THE INVENTION

### PROBLEMS TO BE SOLVED BY THE INVENTION

According to the technologies described in Patent Documents 1 and 2 mentioned above, however, the following problems occur. That is, in the bush described in Patent Document 1, in addition to the paired bearing members, the paired packing seals and fixing rings are provided, and paired dust covers are mounted after swaging the joint pin. Therefore, the number of components is large, which invites complexity of the assembling process, and a problem of increasing manufacturing cost can arise.

Also, in the bush described in Patent Document 2, when molten polymer material is solidified, the inner cylinder (the polymer material) is solidified and shrunk, thereby causing gap of the inner cylinder in the sleeve. In this case, not only an unusual sound occurs but also the inner cylinder wears early in an unbalanced manner, and a problem of making it difficult to enhance the life of the bush can arise (Assembling Pattern A). Also, when the inner cylinder is formed in advance, at the time of bending the inner flange along the shape of the inner cylinder, characteristics such as spring-back of the sleeve are required to be taken into consideration, requiring high assembling accuracy (Assembling Pattern B).

An object of the present invention is to provide a bush improved in manufacturing cost by reducing the number of components without requiring high assembling accuracy, and enhanced in life by suppressing backlash.

### MEANS FOR SOLVING THE PROBLEMS

A bush of the present invention is provided between one of members and the other of the members to absorb impact and vibrations transmitted between the members, the bush comprising: an outer cylinder mounted on one of the members; an inner cylinder provided on the inside of the outer cylinder in a radial direction; a buffer member provided between the outer cylinder and the inner cylinder; a joint pin mounted on the other of the members, and extending in an axial direction of the inner cylinder on the inside of the inner cylinder in the radial direction; a projecting portion provided to the joint pin, projecting outward in a radial direction of the joint pin, and including shoulder portions on both sides in an axial direction; a bearing provided between the inner cylinder and the projecting portion, and guiding a relative rotation of the joint pin with respect to the inner cylinder; bent portions provided on both sides in the axial direction of the inner cylinder, and being bent inward in the radial direction of the inner cylinder; and elastic members incorporated between the bent portions and the shoulder portions of the projecting portion.

In the bush of the present invention, the elastic members support both sides in an axial direction of the bearing.

In the bush of the present invention, the elastic members are incorporated in a pressured state between the shoulder portions and the bent portions.

In the bush of the present invention, an expanding amount inward in the radial direction of the bent portions is set to be an expanding amount overlapping at least an outer periphery surface of a largest outer diameter in the radial direction of the projecting portion of the joint pin.

In the bush of the present invention, bearing projections projecting inside in the radial direction of the joint pin are provided on both sides in the axial direction of the bearing, and the bearing projections are supported by the shoulder portions.

### EFFECTS OF THE INVENTION

According to the bush of the present invention, the joint pin extending in the axial direction of the inner cylinder is provided inside in the radial direction of the inner cylinder, the projecting portion projecting toward the outside in the radial direction of the joint pin is provided to the joint pin, the shoulder portions are provided on both sides in the axial direction of the projecting portion, the bearing guiding relative rotation of the joint pin with respect to the inner cylinder is provided between the inner cylinder and the projecting portion, the bent portions being bent inward in the radial direction of the inner cylinder are provided on both sides in the axial direction of the inner cylinder, and the elastic member is incorporated between each bent portion and each shoulder portion. With this, the bent portions support the projecting portion from both sides in the axial direction via the elastic members, thereby preventing the joint pin from falling from the inner cylinder. Therefore, it is possible to reduce the number of components by omitting a packing seal, a fixing ring and the like conventionally used, and to simplify the assembling process to reduce manufacturing cost. Also, since the joint pin is prevented from falling via the elastic members, an impact load exerted in the axial direction of the joint pin can be absorbed by the elastic members, and backlash of the joint pin with respect to the inner cylinder can be further suppressed. Thus, premature failure on the bush can be prevented to enhance the life of the bush. Furthermore, when the bush is assembled by bending and deforming the bent portions, deformation errors of the bent portions can be absorbed by the elastic member, thereby reducing manufacturing cost without high assembling accuracy.

According to the bush of the present invention, since the elastic members support both sides in the axial direction of the bearing, it is possible to prevent backlash of the bearing in the axial direction. Therefore, it is possible to suppress unusual sounds due to backlash of the bearing and unbalanced wear of the bearing due to an unbalanced load.

According to the bush of the present invention, since each elastic member is incorporated in a pressured state between the shoulder portion and the bent portion, sealing properties by the elastic members can be improved. That is, since the elastic members are incorporated in a pressured state, the elastic members are prevented from being separated from the projecting portion even if the joint pin is shifted by an external force in the axial direction with respect to the inner cylinder, and therefore dusts and the like can be reliably inhibited from entering between the bearing and the projecting portion.

According to the bush of the present invention, the expanding amount inward in the radial direction of each bent portion is set as at least an expanding amount overlapping the most outer periphery surface of the projecting portion of the joint pin. Therefore the strength of the joint pin against falling from the inner cylinder can be improved. That is, the stiffness of the bush can be increased.

According to the bush of the present invention, the bearing projections projecting toward the inside in the radial direction of the joint pin are provided on both sides in the axial direction of the bearing, and the bearing projections are supported by the shoulder portions. Therefore, the joint pin and the bearing can be integrated and prevented from being relatively moved with respect to each other in the axial direction. Therefore, the strength of the joint pin against falling from the inner cylinder can be further improved.

### BRIEF DESCRIPTIONS OF THE DRAWINGS

FIG. 1 is a view explaining a suspension device to be mounted between a vehicle body and an axle of a heavy truck of rear tandem axle type;
FIG. 2 is a perspective view showing a torque rod for use in the suspension device of FIG. 1;
FIG. 3 is a sectional view showing a bush (first embodiment) to be mounted on the torque rod of FIG. 2;
FIG. 4 is a view explaining the structure of a bush main body;
FIG. 5 is a view explaining the structure of a joint pin;
FIGS. 6A and 6B are views explaining the structure of a bearing;
FIGS. 7A and 7B are views explaining the structure of an elastic member;
FIG. 8 is a view explaining a procedure of mounting the bearing on the joint pin (first assembling process);
FIG. 9 is a view explaining a procedure of mounting the bush main body on a joint pin-bearing assembly (second assembling process);
FIG. 10 is a view explaining a procedure of mounting each elastic member on a joint pin-bush main body assembly (third assembling process);
FIGS. 11A, 11B, and 11C are views explaining a swaging process (fourth assembling process) of bending and deforming each thin portion;
FIG. 12 is a fragmentary enlarged view showing a bush according to the second embodiment of the present invention; and
FIG. 13 is a fragmentary enlarged view showing a bush according to the third embodiment of the present invention.

### BEST MODE FOR CARRYING OUT THE INVENTION

Hereinafter, the first embodiment of the present invention will be described in detail with reference to the drawings.

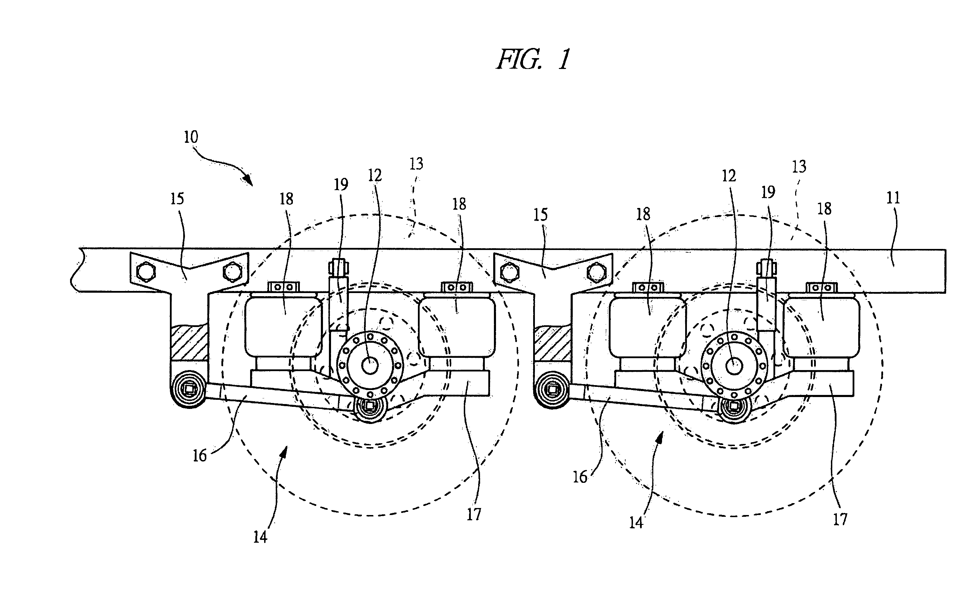

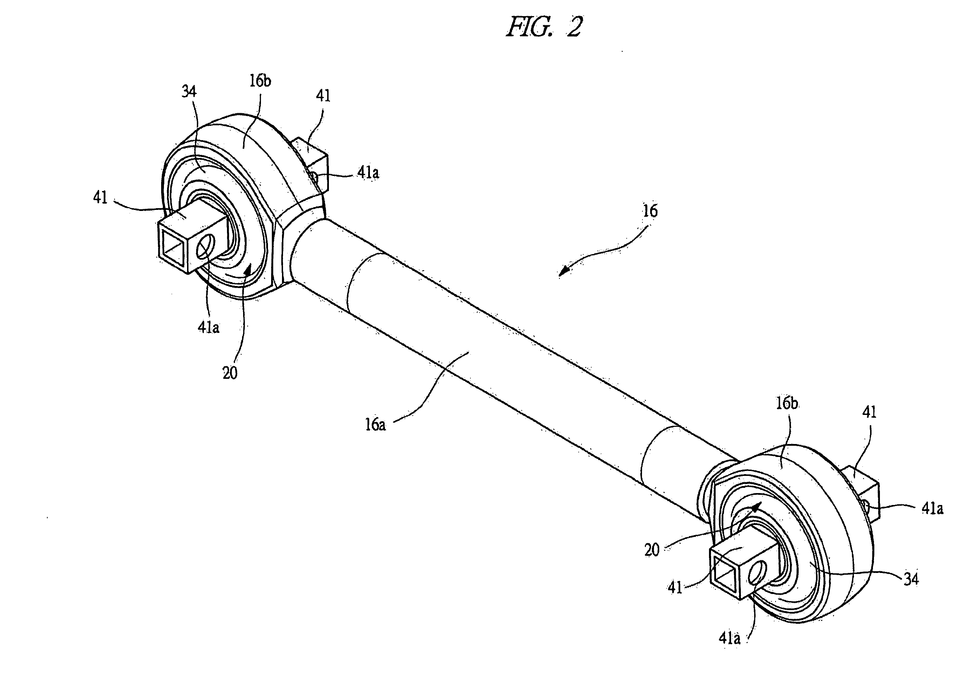

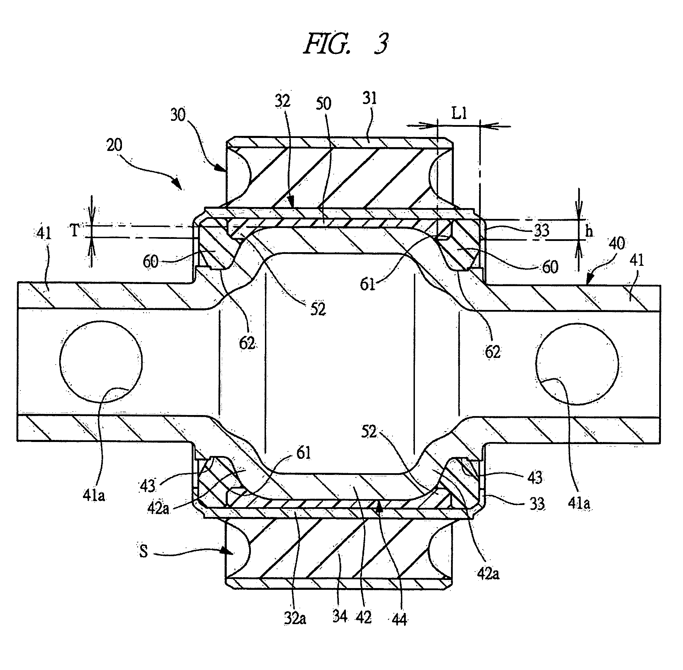

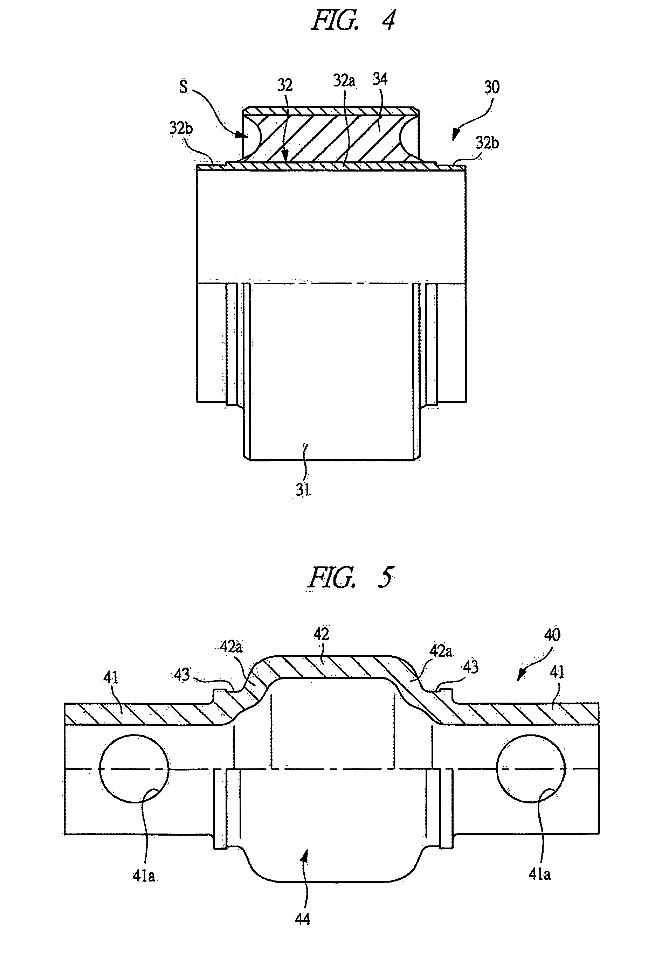

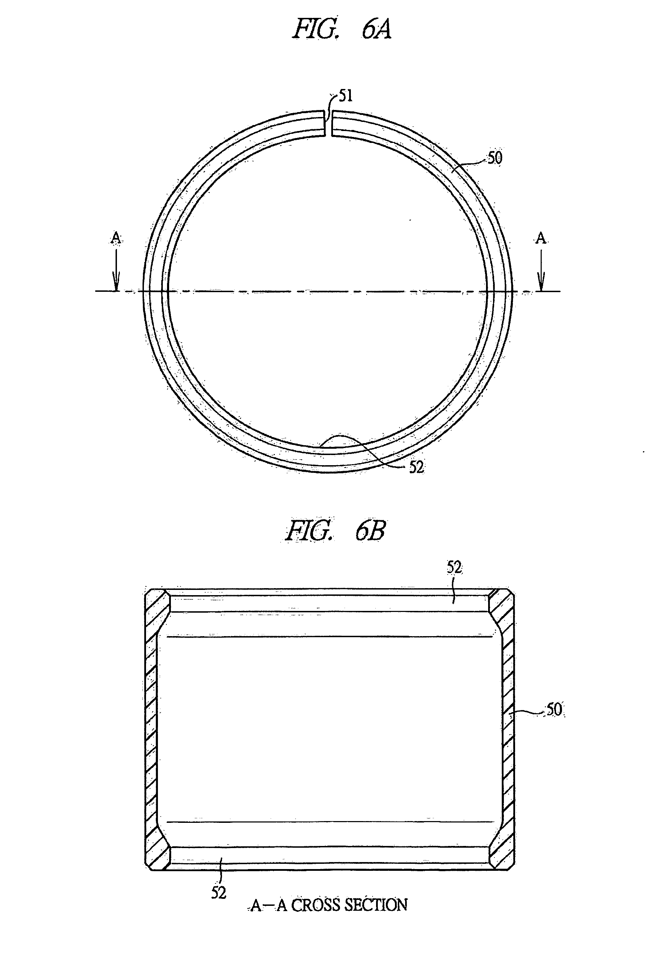

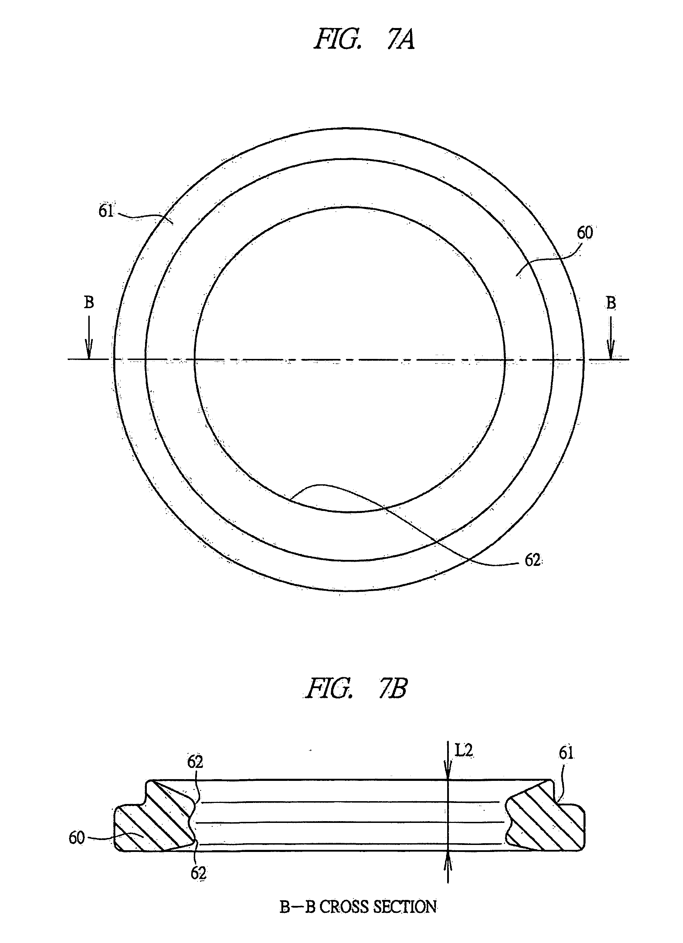

FIG. 1 is a view explaining a suspension device to be mounted between a vehicle body and an axle of a heavy truck of rear tandem axle type, FIG. 2 is a perspective view showing a torque rod for use in the suspension device of FIG. 1, FIG. 3 is a sectional view showing a bush (first embodiment) to be mounted on the torque rod of FIG. 2, FIG. 4 is a view explaining the structure of a bush main body, FIG. 5 is a view explaining the structure of a joint pin, FIGS. 6A and 6B are views explaining the structure of a bearing, and FIGS. 7A and 7B are views explaining the structure of an elastic member.

As shown in FIG. 1, on the rear side of a frame 11 forming the vehicle body of a heavy truck 10 of rear tandem axle type, paired rear axles 12 are provided side by side in a longitudinal direction (horizontal direction in the drawing) of the frame 11. On both end sides along a lateral direction (depth direction in the drawing) of the frame 11 of each rear axle 12, paired rear wheels 13 (only one is shown in this drawing) are mounted. Each rear axle 12 is supported by the frame 11 via a suspension device 14.

The suspension device 14 includes a joint member 15 having one end side coupled to the frame 11, a torque rod 16 having one end side rotatably coupled to the other end side of the joint member 15, and a support member 17 rotatably coupled to the other end side of the torque rod 16 to support the rear axle 12. The joint member 15, the torque rod 16, and the support member 17 form a link mechanism, and paired air springs 18 and a hydraulic damper 19 are provided between the support member 17 and the frame 11. Each air spring 18 and the hydraulic damper 19 are adapted to expand and contract in response to vertical motions of the support member 17 with vertical motions of the rear wheel 13.

The torque rod 16 provided between the joint member 15 and the support member 17 includes, as shown in FIG. 2, a rod body 16a and paired mount rings 16b fixed to both end sides thereof. On each mount ring 16b of the torque rod 16, a bush 20 shown in FIG. 3 is mounted. The bush 20 includes a bush main body 30, a joint pin 40, a bearing 50, and paired elastic members 60.

The bush main body 30 includes, as shown in FIGS. 3 and 4, an outer cylinder 31 made of steel material, and the outer cylinder 31 is fitted into the inside of the mount ring 16b of the torque rod 16.

An inner cylinder 32 formed on the inside in a radial direction of the outer cylinder 31 has a diameter smaller than that of the outer cylinder 31, and an annular space S is formed between the outer cylinder 31 and the inner cylinder 32. The length of the inner cylinder 32 in its axial direction is set to be longer than that of the outer cylinder 31 in its axial direction, and each end of the inner cylinder 32 in its axial direction extends to the outside of the outer cylinder 31. The inner cylinder 32 includes a main-body cylinder portion 32a, and paired thin portions 32b thinner than the main-body cylinder portion 32a are provided to respective ends of the main-body cylinder portion 32a. Each thin portion 32b is placed outside the outer cylinder 31, and as shown in FIG. 3, is folded and deformed inward in the radial direction, so that each thin portion 32b becomes a bent portion 33 at the time of assembling the bush 20.

In the annular space S between the outer cylinder 31 and the inner cylinder 32, a cushion member 34 made of elastic material such as rubber or elastomer is provided by vulcanization adhesion and the like. The cushion member 34 is formed into a cylindrical shape, and elastically deformed when the outer cylinder 31 and the inner cylinder 32 are relatively moved with respect to each other in a radial direction or a tilt direction. As just described, the cushion member 34 is adapted to absorb displacement, that is, vibrations exerted on the inner cylinder 32 or the outer cylinder 31 to prevent its transmission from one to the other. Herein, the bush main body 30 is composed of the outer cylinder 31, the inner cylinder 32, and the cushion member 34.

The joint pin 40 is, as shown in FIGS. 3 and 5, formed from a pipe member made from steel material, and on the inside in a radial direction of the inner cylinder 32 (the bush main body 30), extends so as to penetrate through the inner cylinder 32 in the axial direction. Both sides in an axial direction of the joint pin 40 are paired mount portions 41 having a section formed into an approximately square shape (refer to FIG. 2), and each mount portion 41 is mounted on the joint member 15 or the support member 17 forming the suspension device 14. Each mount portion 41 is formed with a through hole 41a, and fasteners (not shown) such as fastening bolt penetrate through respective through holes 41a. With this, the joint pin 40 can be fixed to the joint member 15 or the support member 17 via the fasteners.

In an approximately center portion of the joint pin 40 along its axial direction, that is, between the through holes 41a of the joint pin 40, a cylindrical projecting portion 42 projecting outward in the radial direction of the joint pin 40 is provided. The outer diameter of the projecting portion 42 is set to be smaller than the inner diameter of the inner cylinder 32, and a bearing 50 is provided between the projecting portion 42 and the inner cylinder 32. The projecting portion 42 is rotatably provided on the inside in the radial direction of the bearing 50, and it is possible to relatively rotate the joint pin 40 around an axis of the inner cylinder 32 with respect to the inner cylinder 32 (the bush main body 30). As described above, the bush 20 is a rotation-type bush.

Each side in the axial direction of the projecting portion 42 has a shoulder portion 42a smoothly continuous from an outer peripheral surface of the projecting portion 42 toward the center axis of the joint pin 40, and each shoulder portion 42a has a surface which faces an approximately axial direction of the joint pin 40 to support each elastic member 60 from the axial direction of the joint pin 40. Between each shoulder portion 42a and each mount portion 41 of the joint pin 40, paired annular concave portions 43 on which each annular lip 62 (refer to FIG. 7) of each elastic member 60 is mounted are provided, and the inside portion in the radial direction of each elastic member 60 is fitted into each annular concave portion 43. With this, it is possible to prevent each annular lip 62 from being moved in an axial direction with respect to the joint pin 40.

An outer peripheral surface 44 of the projecting portion 42 (an outermost peripheral surface in the radial direction of the projecting portion 42) is formed in approximately parallel with the inner peripheral surface of the inner cylinder 32 as shown in FIG. 3. This outer peripheral surface 44 has an outer diameter to overlap each bent portion 33 of the inner cylinder 32 as viewed from the axial direction of the joint pin 40 (refer to a portion with a reference character T in the drawing). That is, an expanding amount h inward in the radial direction of each bent portion 33 is set at an amount that allows a tip portion of each bent portion 33 (the inside in the radial direction) to reach each shoulder portion 42a smoothly continuous to the outer peripheral surface 44. With this, each elastic member 60 is supported between each shoulder portion 42a and each bent portion 33, thereby reliably preventing the joint pin 40 and the bearing 50 from falling from the inner cylinder 32 (the bush main body 30). However, for example, if each elastic member 60 has a sufficient stiffness, the elastic member 60 has only to be held in the axial direction without falling when an external force is exerted in the axial direction. In this case, the expanding amount h of each bent portion 33 inward in the radial direction can also be made small, and the outer peripheral surface 44 and each bent portion 33 may be set so as not to overlap each other when viewed in the axial direction of the joint pin 40. However, since the elastic members 60 of the present invention also serve as dust seals, the elastic members 60 preferably have flexibility with a rubber stiffness on the order of 50 degrees to 80 degrees (JIS K6253 A-type durometer) in view of adhesive and sealing properties with respect to the projecting portion 42, and therefore the expanding amount h is preferably adjusted according to the stiffness of the elastic member 60.

The bearing 50 provided between the projecting portion 42 and the inner cylinder 32 is formed into an approximately cylindrical shape as shown in FIG. 6, and formed of resin material such as plastic. The bearing 50 is provided with a notched portion 51 along its axial direction. With this, the bearing 50 can be elastically deformed in its radial direction.

On both sides in the axial direction of the bearing 50, paired bearing projections 52 projecting toward the inside in the radial direction of the joint pin 40 are integrally provided. Each of the bearing projections 52 is, as shown in FIG. 3, supported in contact with the shoulder portion 42a of the projecting portion 42. With this, the bearing 50 is integrated with the joint pin 40, and cannot be relatively moved with respect to it in the axial direction. Herein, between the inside surface in the radial direction of the bearing 50 and the outer peripheral surface 44 of the joint pin 40, a predetermined amount of sliding grease (not shown) intervenes, thereby making the joint pin 40 smoothly rotatably guided by the bearing 50. Furthermore, note that the notched portion 51 also functions as a grease reservoir holding the sliding grease.

Each elastic member 60 held between each shoulder portion 42a and each bent portion 33 is, as shown in FIG. 7, formed into an annular shape. The elastic member 60 can be appropriately selectable based on the intended use of the bush 20. As a torque rod bush of a heavy truck or the like, in view of strength and wear resistance, material such as NR, EPDM, or SBR, or blended material thereof is preferable. An annular step portion 61 is provided on an outer peripheral edge on one side in the axial direction of the elastic member 60, and the bearing projection 52 enters the annular step portion 61 for close adhesion as shown in FIG. 3. That is, as with each shoulder portion 42a of the projecting portion 42, both sides in the axial direction of the bearing 50 are supported by the respective elastic members 60.

On the inside in the radial direction of the elastic members 60, the paired annular lips 62 are formed side by side in the axial direction of the elastic members 60. The inner diameter of each annular lip 62 is set to be smaller than the outer diameter of the annular concave portion 43 of the joint pin 40, and each annular lip 62 enters the annular concave portion 43 as being elastically deformed. With this, each annular lip 62 inhibits entrance of foreign substances such as rainwater and dusts between the joint pin 40 and the bearing 50. As described above, the elastic members 60 function as sealing members. Herein, each elastic member 60 is fixed to the inside of the inner cylinder 32 together with the bearing 50, and each annular lip 62 slidably abuts on the joint pin 40. Furthermore, note that a predetermined amount of grease is also intervenes between each annular lip 62 and the annular concave portion 43.

The elastic members 60 are incorporated in a pressured state between each shoulder portion 42a and each bent portion 33, and the axial-direction length L1 of the elastic members 60 in an assembled state of the bush 20 shown in FIG. 3 is smaller than the axial-direction length L2 of the elastic members 60 in a natural state (non-load state) shown in FIG. 7 (L1<L2). As described above, each elastic member 60 is nipped in a compressed and deformed state between each shoulder portion 42a and the each bent portion 33. With this, while an axial force with which the joint pin 40 is relatively moved in the axial direction with respect to the inner cylinder 32 is absorbed, backlash of the joint pin 40 and the bearing 50 with respect to the inner cylinder 32 (the bush main body 30) is suppressed.

Also, by incorporating each elastic member 60 in a pressured state, sealing properties between each elastic member 60 and each bent portion 33 is improved, thereby inhibiting entrance of foreign substances such as rainwater and dusts from a space between each elastic member 60 and each bent portion 33 to a space between the joint pin 40 and the bearing 50. Furthermore, note that even when the joint pin 40 relatively moves in the axial direction with respect to the inner cylinder 32, each elastic member 60 is compressed and deformed and therefore is not away from each shoulder portion 42a and each bent portion 33. That is, during absorption of vibrations of the bush 20 (during operation), the function of each elastic member 60 as a sealing member is not impaired.

Next, a procedure of assembling the bush 20 formed as described above is described in detail by using the drawings.

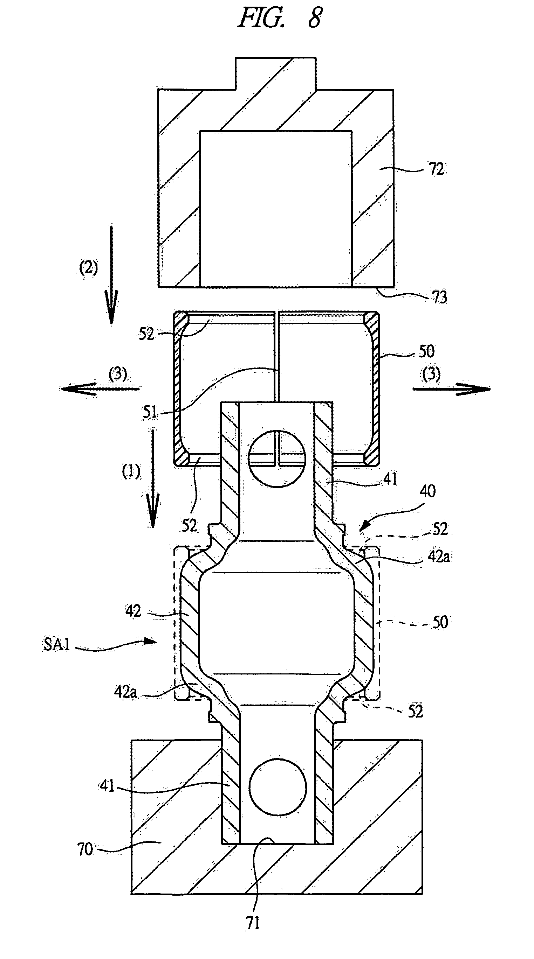

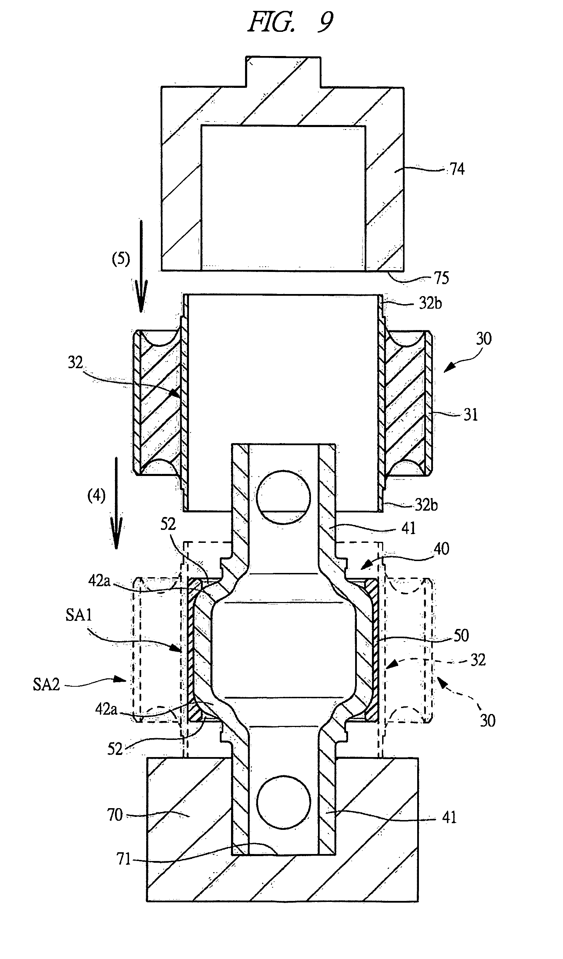

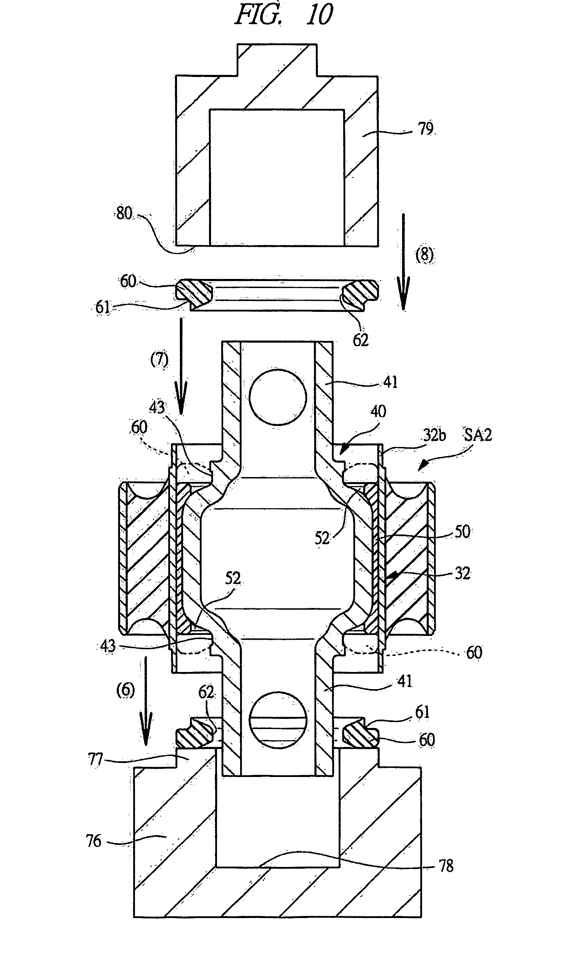

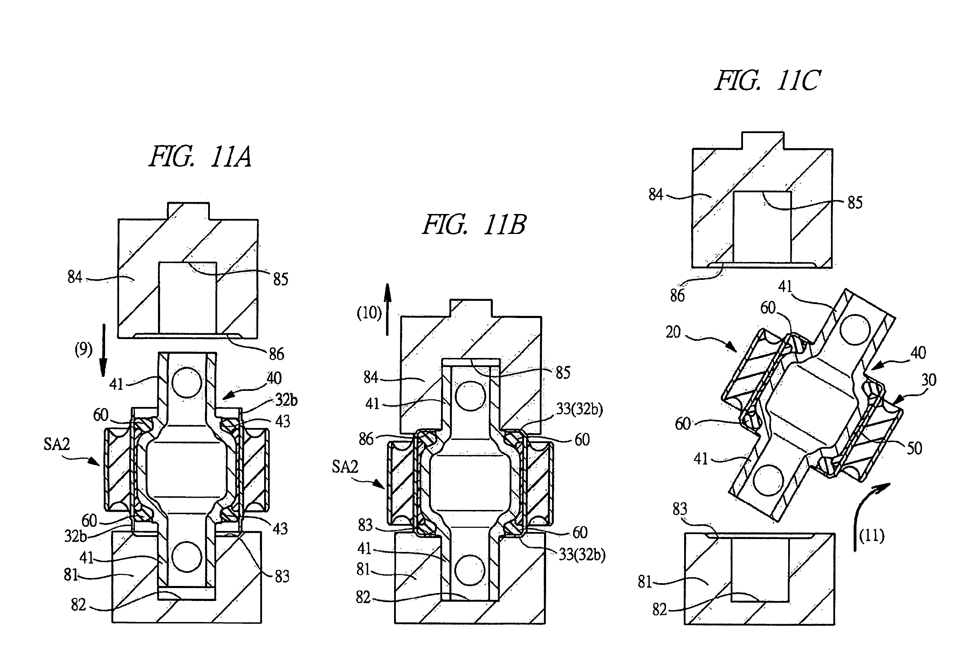

FIG. 8 is a view explaining a procedure of mounting the bearing on the joint pin (first assembling process), FIG. 9 is a view explaining a procedure of mounting the bush main body on a joint pin-bearing assembly (second assembling process), FIG. 10 is a view explaining a procedure of mounting each elastic member on a joint pin-bush main body assembly (third assembling process), and FIGS. 11A, 11B, and 11C are views explaining a swaging process (fourth assembling process) of bending and deforming each thin portion.

### [First Assembling Process]

As shown in FIG. 8, the joint pin 40 and the bearing 50, each of which is formed into a predetermined shape in a separate process in advance, are firstly prepared. Then, one mount portion 41 of the joint pin 40 is inserted into a support concave portion 71 of a first jig 70 to set the joint pin 40 to the first jig 70. On the other hand, a predetermined amount of sliding grease (not shown) is previously applied to the inside in the radial direction of the bearing 50 by a brush or the like. Then, as indicated by an arrow (1) in the drawing, with the joint pin 40 and the bearing 50 being axially aligned with each other, from the other mount portion 41 side of the joint pin 40, the bearing 50 is moved so as to approach the joint pin 40 by using a second jig 72. At this time, an annular pushing portion 73 of the second jig 72 abuts on the other end of the bearing 50.

Subsequently, as indicated by an arrow (2) in the drawing, the second jig 72 is moved down so as to approach the first jig 70. With this, one bearing projection 52 of the bearing 50 goes over the other shoulder portion 42a of the joint pin 40 to cause the bearing 50 to be extended as indicated by arrows (3) in the drawing. At this time, since the bearing 50 is easily flexible due to the notched portion 51, it is possible to mount the bearing 50 on the joint pin 40 with substantially little resistance. Then, by further moving down the second jig 72, as indicated by a broken-line portion in the drawing, the bearing 50 is placed at a fixed position to cover the projecting portion 42 of the joint pin 40. That is, bearing projections 52 of the bearing 50 is supported by respective shoulder portions 42a of the joint pin 40. With this, a joint pin-bearing assembly SA1 is completed.

### [Second Assembling Process]

Next, as shown in FIG. 9, the bush main body 30 assembled in a separate process in advance is prepared. With the joint pin-bearing assembly SA1 being set to the first jig 70, the bush main body 30 and the joint pin-bearing assembly SA1 are axially aligned with each other. Then, as indicated by an arrow (4) in the drawing, the bush main body 30 is moved so as to approach the joint pin 40 by using a third jig 74 from the other mount portion 41 side of the joint pin 40. At this time, an annular pushing portion 75 of the third jig 74 is caused to abut on the other thin portion 32b of the inner cylinder 32.

Subsequently, as indicated by an arrow (5) in the drawing, the third jig 74 is moved down so as to approach the first jig 70. With this, the bearing 50 is fitted in the inner cylinder 32 of the bush main body 30 so that the inner cylinder 32 of the bush main body 30 gradually covers the outer peripheral surface of the bearing 50. At this time, since the bearing projections 52 are supported by the respective shoulder portions 42a, the bearing 50 is not relatively moved with respect to the joint pin 40. Then, by further moving down the third jig 74, as indicated by a broken-line portion in the drawing, the bush main body 30 is placed at a fixed position with respect to the bearing 50. That is, this assembly takes a state in which a center potion in the axial direction of the bearing 50 and a center portion in the axial direction of the bush main body 30 are coaxially arranged, thereby completing a joint pin-bush main body assembly SA2.

### [Third Assembling Process]

Next, as shown in FIG. 10, the paired elastic members 60, each of which is formed into a predetermined shape in a separate process in advance, are prepared, and oil (not shown) for allowing each of the elastic members 60 to be easily mounted on the joint pin-bush main body assembly SA2 is applied onto each elastic member 60. Then, one elastic member 60 is placed on an annular convex portion 77 of a fourth jig 76. At this time, the annular step portion 61 of the elastic member 60 is set to be oriented to the other side (upward in the drawing). Then, as indicated by an arrow (6) in the drawing, the joint pin-bush main body assembly SA2 is moved so as to approach the fourth jig 76, and one mount portion 41 of the joint pin 40 is inserted into a support concave portion 78 of the fourth jig 76, thereby setting the joint pin-bush main body assembly SA2 into the fourth jig 76.

Subsequently, as indicated by an arrow (7) in the drawing, with the axis of the other elastic member 60 and the axis of the joint pin-bush main body assembly SA2 being coaxially arranged, the other elastic member 60 is moved so as to approach the other thin portion 32b of the inner cylinder 32. Then, as indicated by an arrow (8) in the drawing, the other elastic member 60 is pressed from the other mount portion 41 side of the joint pin 40 by using a fifth jig 79. At this time, an annular pressing portion 80 of the fifth jig 79 is caused to abut on the other elastic member 60. Then, as indicated by a broken-line portion in the drawing, each elastic member 60 is placed at a fixed position with respect to the joint pin-bush main body assembly SA2. That is, the annular lips 62 of the elastic members 60 respectively enter the annular concave portions 43 of the joint pin 40, and the bearing projections 52 of the bearing 50 respectively enter the annular step portions 61 of the elastic members 60. With this, provisional mounting of each elastic member 60 on the joint pin-bush main body assembly SA2 is completed.

### [Fourth Assembling Process]

Next, as shown in FIG. 11A, the joint pin-bush main body assembly SA2 with each elastic member 60 provisionally mounted thereon is moved to a sixth jig 81. Herein, since the elastic members 60 are supported by the respective annular concave portions 43, each elastic member 60 is prevented from falling from the joint pin-bush main body assembly SA2 at the time of moving to the sixth jig 81. Then, one mount portion 41 of the joint pin 40 of the joint pin-bush main body assembly SA2 is inserted into a support concave portion 82 of the sixth jig 81, and the joint pin-bush main body assembly SA2 is set to the sixth jig 81. At this time, one thin portion 32b of the inner cylinder 32 is caused to abut on a first swaging concave portion 83 formed on an opening side of the support concave portion 82 of the sixth jig 81.

Subsequently, as indicated by an arrow (9) in the drawing, it is moved to approach a seventh jig 84 from the other mount portion 41 side of the joint pin 40. At this time, the other mount portion 41 is inserted into a support concave portion 85 of the seventh jig 84. Then, by further moving down the seventh jig 84, a second swaging concave portion 86 formed on an opening side of the support concave portion 85 of the seventh jig 84 is caused to abut on the other thin portion 32b of the inner cylinder 32.

Next, by increasing the pressing load of the seventh jig 84 onto the sixth jig 81, as shown in FIG. 11B, the thin portions 32b of the inner cylinder 32 are folded and deformed along the shape of the respective swaging concave portions 83 and 86 toward the inside in the radial direction. With this, each thin portion 32b becomes a bent portion 33. Herein, since the thin portions 32b are respectively bent and deformed along the elastic members 60 to compress and deform the elastic members 60, the elastic members 60 can absorb deformation errors of the bent portions 33. Therefore, it is not necessary to take account of spring-back and the like of each thin portion 32b, and high processing accuracy.

Then, as indicated by an arrow (10) in the drawing, the seventh jig 84 is moved up with respect to the sixth jig 81 to extract the other mount portion 41 from the support concave portion 85 of the seventh jig 84. Then, as indicated by an arrow (11) of FIG. 11C, the one mount portion 41 is extracted from the support concave portion 82 of the sixth jig 81, thereby completing the bush 20.

Herein, the moving up/down operations of the second jig 72, the third jig 74, the fifth jig 79, and the seventh jig 84 can be automatically performed with an actuator such as hydraulic cylinder being taken as a driving source. Furthermore, in the moving up/down operations of the second jig 72, the third jig 74, and the fifth jig 79, since the driving force (swaging process) as much as that of the seventh jig 84 is not required, the operations may be performed manually by the operator.

As has been described in detail, according to the bush 20 of the first embodiment, the joint pin 40 extending in the axial direction of the inner cylinder 32 is provided on the inside in the radial direction of the inner cylinder 32, the projecting portion 42 projecting outward in the radial direction of the joint pin 40 is provided to the joint pin 40, the shoulder portions 42a are provided on both sides in the axial direction of the projecting portion 42, the bearing 50 guiding relative rotation of the joint pin 40 with respect to the inner cylinder 32 is provided between the inner cylinder 32 and the projecting portion 42, the bent portions 33 being bent toward the inside in the radial direction of the inner cylinder 32 are provided on both sides in the axial direction of the inner cylinder 32, and the elastic member 60 is incorporated between each bent portion 33 and each shoulder portion 42a.

With this, the bent portions 33 support the projecting portion 42 from both sides in the axial direction via the elastic members 60, thereby preventing the joint pin 40 from falling from the inner cylinder 32. Therefore, the number of components can be reduced by omitting a packing seal, a fixing ring and the like conventionally used and, in turn, the assembling process can be simplified to reduce manufacturing cost. Also, since the joint pin 40 is prevented from falling via the elastic members 60, impact and vibration load exerted in the axial direction of the joint pin 40 can be absorbed by the elastic members 60, and backlash of the joint pin 40 with respect to the inner cylinder 32 can be further suppressed. Therefore, premature failure on the bush 20 can be prevented and the life of the bush 20 can be enhanced. Furthermore, when the bush 20 is assembled by folding and deforming the bent portions 33, deformation errors of the bent portions 33 can be absorbed by the elastic member 60, and since the bush 20 is assembled without high assembling accuracy, it is possible to reduce the manufacturing cost of the bush 20.

Also, according to the bush 20 of the first embodiment, since the elastic members 60 support both sides in the axial direction of the bearing 50, it is possible to prevent backlash of the bearing 50 in the axial direction. Thus, it is possible to prevent the occurrence of unusual sound due to backlash of the bearing 50 and unbalanced wear of the bearing 50 due to an unbalanced load.

Furthermore, according to the bush 20 of the first embodiment, since each elastic member 60 is incorporated in a pressured state between the shoulder portion 42a and the bent portion 33, sealing properties by the elastic members 60 can be improved. That is, with the elastic members 60 in a pressured state, dusts and the like can be reliably inhibited from entering between the bearing 50 and the projecting portion 42.

Also, according to the bush 20 of the first embodiment, the expanding amount h inward in the radial direction of each bent portion 33 is set as an expanding amount h overlapping the outer peripheral surface 44 of the projecting portion 42 of the joint pin 40, and therefore the strength of the joint pin 40 against falling from the inner cylinder 32 can be improved. That is, the stiffness in the axial direction of the bush 20 can be increased.

Still further, according to the bush 20 of the first embodiment, the bearing projections 52 projecting inside in the radial direction of the joint pin 40 are provided on both sides in the axial direction of the bearing 50, and the bearing projections 52 are caused to be pressed to support the shoulder portions 42a. Thus, the joint pin 40 and the bearing 50 can be integrated so as not to be able to relatively move with respect to the axial direction. Therefore, the strength of the joint pin 40 against falling from the inner cylinder 32 can be further improved.

Furthermore, in the first embodiment, note that when the bush 20 according to the present invention is mounted between the joint member 15 and the torque rod 16, the joint member 15 corresponds to one member (the vehicle body) and the mount rings 16b of the torque rod 16 correspond to the other member (the axle) . Furthermore, when the bush 20 of the present invention is mounted between the support member 17 and the torque rod 16, the mount rings 16b of the torque rod 16 correspond to one member (the vehicle body), and the support member 17 corresponds to the other member (the axle).

Next, the second embodiment of the present invention will be described in detail with reference to the drawings. Additionally, portions having the same function as those of the first embodiment are denoted by the same reference numbers as those of the first embodiment and the detail descriptions thereof are omitted here.

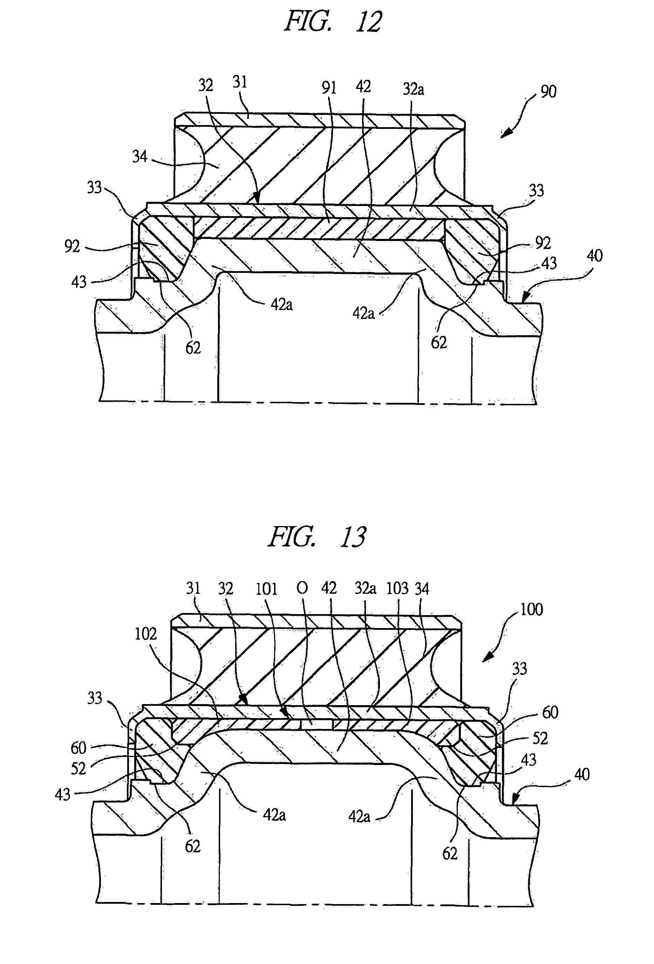

FIG. 12 is a fragmentary enlarged view showing a bush according to the second embodiment of the present invention.

The bearing and each elastic member of the bush 90 of the second embodiment differ from those of the bush 20 of the first embodiment in shape.

A bearing 91 of a bush 90 is formed into a simple cylindrical shape, and compared with the bearing 50 in the first embodiment, the notched portion 51 and each bearing projection 52 are omitted, and the dimension in the axial direction is approximately equal to the length in the axial direction of the projecting portion 42 of the joint pin 40. The inner diameter of the bearing 91 is set to be approximately equal to the outer diameter of the projecting portion 42 of the joint pin 40, and the bearing 91 is assembled from the axial direction of the joint pin 40.

In each elastic member 92 of the bush 90, compared with each elastic member 60 in the first embodiment, the annular step portion 61 is omitted, and both sides in the axial direction of the bearing 91 are directly supported by one end face in the axial direction of each elastic member 92.

According to the bush 90 of the second embodiment, operations and effects similar to those of the first embodiment described above can be achieved except that the bearing 91 does not have bearing projections with respect to the joint pin 40. In addition, according to the bush 90 of the second embodiment, since the bearing 91 is formed into a simple cylindrical shape without bearing projections, the bearing 91 can be formed by forming polyacetal resin, PTFE resin, or the like into a long pipe shape and cutting it into a length as required. Therefore, it can be produced without a mold tool or the like for molding the bearing 91, and reduced in manufacturing cost.

Next, the third embodiment of the present invention will be described in detail with reference to the drawings. Additionally, portions having the same function as those of the first embodiment are denoted by the same reference numbers as those of the first embodiment and the detail descriptions thereof are omitted here.

FIG. 13 is a fragmentary enlarged view showing a bush according to the third embodiment of the present invention.

Compared with the bush 20 according to the first embodiment described above, a bush 100 according to the third embodiment is different in shape of the bearing. A bearing 101 of the bush 100 is a so-called half-divided type, and is formed of a first divided body 102 and a second divided body 103. Each of the divided bodies 102 and 103 does not have a notched portion along the axial direction. When the bush 100 is assembled, each of the divided bodies 102 and 103 is assembled from both sides in the axial direction of the joint pin 40 toward the projecting portion 42.

Between the first divided body 102 and the second divided body 103, a predetermined space O is formed at the time of assembling the bush 100. With this, the divided bodies 102 and 103 are respectively pressed by the elastic members 60, and the bearing projections 52 are respectively pressed and supported by the shoulder portions 42a. Furthermore, note that the predetermined space O functions as a grease reservoir holding sliding grease.

The bearing projections 52 of the divided bodies 102 and 103 have a length in the radial direction set to be long similar to the first embodiment, that is, set to be thicker than the main body portion of the divided bodies 102 and 103, the length being approximately equal to or larger than the expanding amount h (refer to FIG. 3) of the bent portion 33. With this, a pressure-receiving area of a restraint force receiving from each bent portion 33 via the elastic member 60 is increased to achieve reliable prevention of falling of the bearing 101 from the inner cylinder 32. Also, while the elastic members 60 receive a load in the axial direction at the time of relative movement in the axial direction of the inner cylinder 32 and the joint pin 40, portions in close contact to the shoulder portions 42a of the elastic members 60 are in a free state in which the outside in the axial direction is not restricted. Thus, the load in the axial direction is not exerted more than required onto the elastic members 60 and, in turn, wear of the elastic members 60 are suppressed.

Each of the divided bodies 102 and 103 are formed of a bearing-specific resin with a relatively high hardness. Thus, unlike the bearing 50 in the first embodiment, the notched portion 51 extending in the axial direction for assembling is not required to be provided. That is, when the bearing 50 is mounted on the joint pin 40 as being elastically deformed as is the case of the bearing 50 of the first embodiment, if the amount of elastic deformation is large, a crack or the like may occur in the bearing 50. This invites complexity of the bush assembling process and shortening of the life of the bush. Thus, in the bush 100 of the third embodiment, each of the divided bodies 102 and 103 is prepared as a half-divided type, thereby shorting an amount of mounting (a fitting length) on the joint pin 40. Therefore, enhancement the life of the bush can be achieved without making the bush assembling process complex. However, a notched portion extending in the axial direction may be provided for the purpose of absorbing dimensional errors of the inner diameter of the bearing 50 and the outer diameter of the projecting portion 42.

Also in the above-structured bush 100 according to the third embodiment, operations and effects similar to those of the first embodiment described above can be achieved. In addition, according to the bush 100 of the third embodiment, since the predetermined space O is formed between the divided bodies 102 and 103, the predetermined space O absorbs dimensional errors of the projecting portion 42. Therefore, each bearing projection 52 can be reliably made abut on each shoulder portion 42a, and backlash of the bearing 101 with respect to the joint pin 40 can be more reliably suppressed.

The present invention is not meant to be restricted to each of the embodiments described above, and it goes without saying that the present invention can be variously changed within a range not deviating from the gist of the invention. For example, while both sides in the axial direction of each of the bearings 50, 91, and 101 are supported by the elastic members 60 in each of the embodiments described above, the present invention is not meant to be restricted to this, and each of the bearings 50, 91, and 101 may be in a state not in contact with each elastic member 60. In this case, even if the bearing moves in the axial direction with respect to the joint pin, the bearing makes contact with the elastic members and therefore does not produce an unusual sound.

Also, while each elastic member 60 is incorporated in a pressured state between the bent portion 33 and the shoulder portion 42a in each of the embodiments described above, the present invention is not meant to be restricted to this, and each elastic member 60 can be incorporated in a non-pressured state according to the specifications of the bush, that is, the stiffness required for the bush with respect to the axial direction.

Furthermore, while the bush placed on the rear axle 12 side of the torque rod 16 (refer to FIG. 1) is mounted on the support member 17 in each of the embodiments described above, the present invention is not meant to be restricted to this and, as a matter of course, the bush may be directly mounted on the rear axle 12 not via the support member 17.

Also, while the bush is used for the torque rod 16 forming the suspension device 14 of the heavy truck 10 in each of the embodiments described above, the present invention is not meant to be restricted to this and can be used for the purpose of using a rotation-type bush, that is, the present invention can be used at a mount portion of an engine mount, a stabilizer bar, or the like.

### INDUSTRIAL APPLICABILITY

The bush is provided between one member and the other member to absorb impact and vibrations transmitted between the members, is assembled to a torque rod connecting a vehicle body and an axle of a vehicle such as truck, bus, or the like to allow a predetermined range of a relative movement of the axle with respect to the vehicle body, and is used to absorb propagation of impact vibrations inputted from a road surface to the vehicle body.

## Claims

1. A bush provided between one member and the other member to absorb impact and vibrations transmitted between the members, the bush comprising:
an outer cylinder mounted on one of the members;
an inner cylinder provided on the inside of the outer cylinder in a radial direction;
a buffer member provided between the outer cylinder and the inner cylinder;
a joint pin mounted on the other of the members, and extending in an axial direction of the inner cylinder on the inside of the inner cylinder in the radial direction;
a projecting portion provided to the joint pin, projecting outward in a radial direction of the joint pin, and including shoulder portions on both sides in an axial direction;
a bearing provided between the inner cylinder and the projecting portion, and guiding a relative rotation of the joint pin with respect to the inner cylinder;
bent portions provided on both sides in the axial direction of the inner cylinder, and being bent inward in the radial direction of the inner cylinder; and
elastic members incorporated between the bent portions and the shoulder portions of the projecting portion.

2. The bush according to claim 1, wherein the elastic members support both sides in an axial direction of the bearing.

3. The bush according to claim 1, wherein the elastic members are incorporated in a pressured state between the shoulder portions and the bent portions.

4. The bush according to claim 1, wherein an expanding amount inward in the radial direction of the bent portions is set to be an expanding amount overlapping at least an outer periphery surface of a largest outer diameter in the radial direction of the projecting portion of the joint pin.

5. The bush according to claim 1, wherein bearing projections projecting inside in the radial direction of the joint pin are provided on both sides in the axial direction of the bearing, and the bearing projections are supported by the shoulder portions.
